# DEMANDE DE BREVET EUROPEEN

(11) **EP 1 281 672 A1**
(43) Date de publication de la demande: **05.02.2003**
(21) Numéro de dépôt: 02077988.0
(22) Date de dépôt: 22.07.2002
(51) Int. Cl.: C01G 23/053, C09C 1/36, C03C 17/25

(54) **Elaboration par voie chimique d'une solution pour depots a effets photo-catalytiques**

(30) Priorité: 31.07.2001 FR 0110251
(71) Demandeur: Koninklijke Philips Electronics N.V., 5621 BA Eindhoven (NL)
(72) Inventeur: Vautey, Christophe, Société Civile S.P.I.D., 75008 Paris (FR); Langlet, Michel, Société Civile S.P.I.D., 75008 Paris (FR); Kim, Alexei, Société Civile S.P.I.D., 75008 Paris (FR)
(74) Mandataire: Chaffraix, Jean

(57) **Abrégé**

L'invention concerne un procédé d'élaboration d'une solution [FSOL] incluant des pigments d'anatase destinée à être déposée sur un substrat comprenant : une étape initiale [MIX] de réaction chimique en phase liquide, ladite phase liquide incluant de l'eau [AQ], un catalyseur basique, un précurseur de titane [TI] réagissant par hydrolyse et polycondensation en phase aqueuse basique, le rapport de concentration du précurseur de titane avec le catalyseur étant choisi pour favoriser la croissance de cristallites submicroniques, au moins une étape de dilution [DIL] dans au moins un solvant organique [SOL] présentant un point d'ébullition supérieur à celui de l'eau ou présentant un azéotrope à minimum avec l'eau, au moins une étape de reconcentration [REC] de la solution obtenue par élimination de l'eau ou de l'azéotrope eau-solvant.

L'invention permet l'obtention, sans traitement thermique à haute température, d'un substrat autonettoyant muni sur au moins une partie d'une de ses faces d'un revêtement à propriétés photo-catalytiques à base de dioxyde de titane au moins partiellement cristallisé et incorporé audit revêtement en partie sous forme de particules majoritairement cristallisées sous forme anatase.

Application : Substrats sensibles aux hautes températures ayant un intérêt à présenter un effet autonettoyant.

## Description

L'invention concerne un procédé d'élaboration d'une solution incluant des pigments d'anatase. L'invention concerne dans une application directe un procédé d'obtention d'un substrat muni sur au moins une partie d'une de ses faces d'un revêtement à propriétés photo-catalytiques à base de dioxyde de titane au moins partiellement cristallisé et incorporé audit revêtement en partie sous forme de particules majoritairement cristallisées sous forme anatase par dépôt d'une solution élaborée selon le procédé d'élaboration évoqué ci-dessus.

Un tel procédé est, par exemple, connu du document « Nanostructuring Titania : Control over Nanocrystal Structure, Size, Shape and Organization », de A. Chemseddine et T. Moritz, publié dans European Journal of Inorganic Chemistry 1999, 235-245. Le procédé décrit dans ce document propose une méthode de croissance à température ambiante de cristaux d'anatase dans une phase aqueuse. Ce procédé permet d'obtenir une distribution homogène de nanocristaux d'anatase dans la solution aqueuse.

L'invention est liée aux considérations suivantes :
La solution aqueuse obtenue par le procédé de l'état de la technique n'est pas adaptée au dépôt de couches minces, du fait de la grande tension superficielle de la solution aqueuse et de sa concentration en oxyde de titane très faible ne permettant pas d'obtenir un dépôt homogène et d'épaisseur suffisante. De plus, les solutions obtenues ne permettent pas d'obtenir une couche possédant des propriétés optiques compatibles avec une application sur un substrat transparent et qui doit le rester.

Un but de l'invention est de fournir une solution aisément déposable et permettant l'obtention d'une activité photo-catalytique des pigments d'anatase sans traitement thermique à température élevée lorsque la solution est déposée sur un substrat. Le substrat présente dans ce cas des propriétés autonettoyantes. La solution obtenue doit aussi permettre un dépôt sur un substrat sans occulter les propriétés optiques de ce substrat.

En effet, un procédé d'élaboration d'une solution incluant des pigments d'anatase conforme au paragraphe introductif est remarquable selon l'invention en ce qu'il comprend :
- une étape initiale de réaction chimique en phase liquide, ladite phase liquide incluant de l'eau, un catalyseur basique, un précurseur de titane réagissant par hydrolyse et polycondensation en phase aqueuse basique, le rapport de concentration du précurseur de titane avec le catalyseur étant choisi pour favoriser la croissance de cristallites de formes variées,
- au moins une étape de dilution dans au moins un solvant organique présentant un point d'ébullition supérieur à celui de l'eau ou présentant un azéotrope à minimum avec l'eau,
- au moins une étape de reconcentration de la solution obtenue par élimination de l'eau ou de l'azéotrope eau-solvant.

La solution obtenue par le procédé selon l'invention peut être déposée au moyen de procédés classiques utilisés en sol-gel et conduit à des dépôts d'épaisseur contrôlable, de bonne qualité optique et présentant un effet photo-catalytique notable. L'utilisation d'un solvant présentant un azéotrope à minimum avec l'eau est particulièrement avantageux car ledit azéotrope s'évapore plus facilement qu'un solvant à point d'ébullition supérieur à celui de l'eau. Le dépôt est ainsi plus rapide.

Un autre but de l'invention est l'obtention d'un substrat muni sur au moins une de ses faces d'un revêtement à propriétés photo-catalytiques. Dans une de ses applications, l'invention concerne donc également la fabrication d'un substrat possédant des propriétés autonettoyantes. Le catalyseur est un catalyseur basique ne détériorant pas les propriétés photo-catalytiques des cristallites d'anatase. Par exemple, le catalyseur est du tétraméthylammonium hydroxyde. Le procédé de fabrication s'applique particulièrement dans le cas de substrats thermiquement sensibles, par exemple substrats polymères, ou de substrats susceptibles de perdre leurs propriétés lors d'un traitement à haute température, par exemple verre trempé, polycarbonate, PMMA... En effet, le dépôt présente des propriétés photo-catalytiques notables même sans traitement thermique à basse température. Dans le cas de substrats polymères, une sous-couche protectrice peut être déposée avantageusement pour éviter la détérioration du substrat par l'effet photo-catalytique du dépôt d'anatase. Le procédé de fabrication s'applique également à des substrats en verre minéral, par exemple verre sodo-calcique. Dans ce cas, le procédé de fabrication permet d'éviter la nécessité d'une sous-couche pour protéger la couche autonettoyante de la migration des ions du substrat lors d'un traitement thermique. En effet, le dépôt de la solution selon l'invention permettant d'observer une activité photo-catalytique sans traitement thermique à haute température, le problème de la migration d'ions est absent. Dans un mode de réalisation préféré de l'invention, le substrat obtenu après dépôt de la solution fabriquée selon un procédé de l'invention est traité thermiquement à basse température (140°C). Cela permet d'améliorer notamment les propriétés photo-catalytiques et l'adhérence au substrat de la couche déposée. Cependant, les propriétés de la couche autonettoyante ne sont pas détruites à cette température par migration d'ions du substrat vers la couche et le substrat n'est pas détérioré. Ce traitement thermique à basse température permet d'obtenir des propriétés autonettoyantes importantes sur des substrats qui ne peuvent pas subir de traitement thermique à haute température. La concentration et les propriétés de la solution obtenue par le procédé selon l'invention permettent de ne traiter le substrat qu'à basse température et d'obtenir cependant une activité photo-catalytique très satisfaisante aux endroits où la solution est déposée.

L'invention sera mieux comprise à la lumière de la description suivante de quelques modes de réalisation, faite à titre d'exemple et en regard des dessins annexés, dans lesquels :
La figure 1 est un diagramme schématique décrivant les étapes d'un procédé selon l'invention.
La figure 2 est un diagramme schématique d'un procédé d'obtention d'un substrat autonettoyant.
La figure 3 est une coupe d'un substrat autonettoyant obtenu à l'aide d'une solution réalisée par un procédé selon l'invention.
La description qui va suivre est présentée pour permettre à un homme du métier de réaliser et de faire usage de l'invention. Cette description est fournie dans le contexte de la demande de brevet et de ses exigences. Des alternatives diverses au mode de réalisation préféré seront évidentes à l'homme du métier et les principes génériques de l'invention exposés ici peuvent être appliqués à d'autres mises en oeuvre.
Ainsi, la présente invention n'est pas sensée être limitée au mode de réalisation décrit mais plutôt avoir la portée la plus large en accord avec les principes et les caractéristiques décrits ci-après.

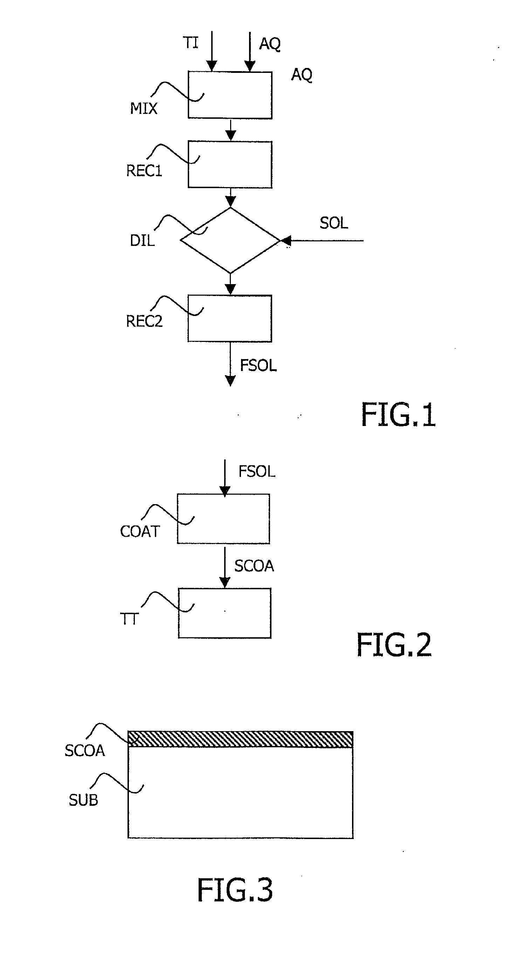

La figure 1 présente un diagramme schématique décrivant les étapes d'un procédé selon l'invention. Un premier but de l'invention est d'obtenir une solution suffisamment concentrée pour pouvoir observer un effet photo-catalytique lorsque la solution est déposée sur un substrat et que le substrat n'est pas traité à haute température. L'invention propose ainsi une amélioration du procédé d'élaboration d'une solution contenant des pigments d'anatase selon la méthode exposée dans le document de l'art antérieur. Dans une première étape MIX, un précurseur de titane TI éventuellement préalablement mélangé à un solvant est mélangé avec une solution aqueuse basique AQ. Le précurseur de titane peut être un alkoxyde de titane ou tout autre précurseur réagissant en phase aqueuse liquide. Les concentrations habituellement utilisées en sol-gel apparaissent adaptées. En effet, les conditions de concentrations n'apparaissent pas critiques en ce qui concerne le degré de cristallisation. Des expériences ont particulièrement été réalisées pour des concentrations de précurseur de titane de 7.10⁻³ à 4,9.10⁻² mol/l. L'obtention de pigments TiO2 à effet photo-catalytique nécessite l'obtention d'une phase cristalline du dioxyde de titane, l'anatase étant la phase cristalline présentant la plus importante efficacité photo-catalytique. Le procédé selon l'invention consiste à générer une transformation sol-gel du précurseur de titane. Usuellement, lors de cette transformation, une polycondensation a lieu avant que l'hydrolyse des groupements alkoxy soit complète. Il en résulte un réseau oxyde de titane incluant des groupements alkoxy non réagis. L'environnement des atomes de titane n'est alors pas totalement oxydé et la phase cristalline ne peut être formée à basse température. Cette limitation est levée en conditions de catalyse basique et en solution aqueuse. Ces conditions sont obtenues expérimentalement avec tout catalyseur suffisamment basique ne contenant pas d'espèces susceptibles de s'incorporer au réseau oxyde et de le doper de manière destructrice pour l'effet photo-catalytique. Dans un mode de réalisation avantageux, le catalyseur est du tétraméthylammonium hydroxyde et le rapport molaire entre le précurseur de titane et le catalyseur est, par exemple, compris entre 4,3 et 31. Ce rapport permet de contrôler la croissance des cristallites obtenues. Dans l'invention, la concentration de catalyseur basique est relativement grande de façon à ce que la croissance des cristallites soit limitée dans certaines directions cristallographiques et que des particules d'anatase ne perturbant pas les propriétés optiques des dépôts soient obtenues majoritairement. En choisissant selon l'invention une concentration de catalyseur inférieure ou supérieure, des cristallites de forme et de taille variée peuvent être obtenues, lesdites cristallites gardant une taille suffisamment petite pour conserver de bonnes propriétés optiques du dépôt finalement effectué sur un substrat. De plus, selon la forme et la taille des cristalites, une plus grande surface spécifique peut être obtenue, ce qui favorise une meilleure activité photo-catalytique même en absence d'un traitement thermique du dépôt final. Dans un contexte général, des conditions basiques aqueuses favorisent l'hydrolyse totale des groupements alkoxy et un ralentissement de la cinétique de polycondensation par peptisation. La peptisation consiste en des répulsions électrostatiques entre les particules en suspension, fortement déprotonnées du fait des conditions basiques. Dans ces conditions, la polycondensation a lieu une fois l'hydrolyse totale terminée, ce qui favorise la création d'un réseau d'oxyde pur. Ce réseau d'oxyde est susceptible de s'ordonner cristallographiquement dans la phase TiO2 stable à basse température, c'est-à-dire sous forme anatase. L'étape de mélange est préférentiellement effectuée sous agitation violente, ceci de manière à éviter la formation de gros cristaux d'anatase. La présence de gros cristaux nuirait aux propriétés optiques des couches obtenues ensuite par dépôt de la solution. Pour des raisons d'activation de l'hydrolyse, la cristallisation est opérée en phase aqueuse, ce qui, en raison de la forte tension superficielle de l'eau ne permet pas de réaliser des dépôts homogènes. Ainsi, l'invention propose diverses phases de reconcentration et d'échange de solvant de manière à rendre la solution déposable en couches minces.

Dans un mode de réalisation, une étape de reconcentration REC1 par chauffage est avantageusement effectuée sur la solution par évaporation d'eau. Cette reconcentration peut par exemple être d'un facteur 10 et est faite à 150°C. Cela permet de concentrer une première fois la solution de manière à faciliter les étapes suivantes. Une étape de dilution DIL dans un solvant SOL présentant un point d'ébullition supérieur à celui de l'eau ou présentant un azéotrope à minimum avec l'eau est ensuite réalisée. Une large gamme de solvants susceptibles d'être adaptés aux différentes techniques de dépôts sol-gel, cela signifiant qu'ils possèdent une faible tension superficielle, est donc accessible. C'est en particulier le cas de très nombreux solvants alcool (éthanol, propanol, butanol...). La dilution peut être effectuée selon tout facteur de dilution dès lors qu'elle est suffisante pour permettre un échange de solvant. Par exemple, la dilution peut être faite avec de l'éthanol et le facteur de dilution peut être de 70. Une étape de reconcentration REC2 de préférence de même facteur que la dilution précédente est ensuite réalisée par évaporation de l'eau restante ou de l'aézotrope eau-solvant selon les propriétés du solvant choisi (point d'ébullition supérieur à celui de l'eau ou à azéotrope à minimum avec l'eau). Par exemple lorsque l'éthanol est choisi comme solvant, l'évaporation de l'azéotrope eau-éthanol est avantageusement réalisée à 130°C. Une solution FSOL concentrée de nanocristaux d'anatase dispersés dans le solvant est obtenue. Cette solution dans un solvant à faible tension superficielle est déposable en couches minces par les techniques de dépôt sol-gel connues. Dans le mode de réalisation décrit auparavant, deux reconcentrations et une dilution sont réalisées, toutes combinaisons d'une ou de plusieurs reconcentrations et d'une ou plusieurs dilutions avec éventuellement plusieurs solvants successifs, le dernier solvant utilisé ayant les propriétés nécessaires au dépôt et énoncées auparavant, sont envisageables pour mettre en oeuvre l'invention. Ainsi par exemple, une reconcentration suivie d'une dilution pourrait constituer une mise en oeuvre.

La figure 2 présente un diagramme schématique d'un procédé de fabrication de substrat autonettoyant muni sur au moins une de ses faces d'un revêtement à propriété photo-catalytique. Un tel procédé utilise la solution FSOL élaborée selon un procédé tel que décrit sur la figure 1 dans une première étape de dépôt COAT. Le dépôt solide SCOA est obtenu après évaporation de la phase liquide. La solution selon l'invention permet notamment d'observer une bonne adhérence de la couche au substrat et de bonnes propriétés optiques.
Dans une mise en oeuvre préférée de la solution, la couche obtenue par ledit dépôt est ensuite traitée thermiquement à basse température (<140°C) dans une étape de traitement thermique TT. En particulier, une gamme de température entre 80°C et 140°C est supportée par un grand nombre de substrats sur lesquels une solution selon l'invention est susceptible d'être avantageusement déposée. Il a été montré qu'un traitement thermique à basse température permet d'améliorer l'activité photo-catalytique ainsi que l'adhérence de la couche. D'une part, l'activation thermique de liaisons sol-gel résiduelles non réagies renforce le réseau d'anatase (liaisons pontantes Ti-O-Ti aux joints de grains et à l'interface substrats/grains) et donc l'adhésion couche-substrat et d'autre part, l'élimination d'espèces adsorbées à la surface des pigments (par exemple, groupements d'éthanol), susceptibles d'écranter l'effet photo-catalytique de l'anatase (par leur propre dégradation), permet d'augmenter l'activité photo-catalytique déjà existante.
Dans un mode de réalisation avantageux, il est possible de renouveler l'opération de dépôt plusieurs fois afin d'obtenir une couche plus épaisse. Le dépôt peut être réalisé par différentes techniques de dépôt sol-gel connues : par exemple, en anglais, ces techniques portent le nom de spin-coating, dip-coating, spray-coating et cell-coating suivant les caractéristiques de la technique.
L'invention peut s'appliquer à toutes les pièces qui peuvent avoir un intérêt à être recouvertes d'un dépôt autonettoyant mais qui ne peuvent être traitées à haute température et/ou par les techniques de dépôt sous vide. Par exemple, sont particulièrement concernées par l'invention les pièces en polymère, dont la résistance à la température est limitée, les pièces en verre trempé, les pièces de formes complexes, aux surfaces difficilement accessibles par les techniques de dépôt physique en phase vapeur, les pièces de grande taille difficiles à traiter par les mêmes techniques. Dans ses applications, l'invention concerne particulièrement les substrats susceptibles d'être utilisés pour l'éclairage intérieur et extérieur où les propriétés optiques sont particulièrement importantes. La simplicité de la fabrication d'un substrat autonettoyant selon l'invention est aussi particulièrement intéressante pour ces applications où les formes sont diverses et où les quantités produites sont importantes.

La figure 3 représente une coupe d'un substrat SUB selon l'invention obtenu par dépôt d'une solution selon l'invention. Le dépôt solide SCOA finalement obtenu peut être réalisé par un dépôt unique d'une couche unique ou par dépôts successifs : plusieurs couches sont alors superposées et l'activité photo-catalytique du dépôt est alors augmentée. C'est ce qui a été observé dans les exemples suivants réalisés par un procédé selon l'invention puis caractérisés après dépôt. Pratiquement, les solutions déposées dans ces exemples sont élaborées à partir d'une concentration en précurseur de titane entre 7.10⁻³ et 4,9.10⁻² mol.l⁻¹, le pH de la solution basique étant d'environ 12, pour des rapports de concentration molaire entre précurseur et catalyseur compris entre 4 et 31. Dans un exemple particulier, les concentrations utilisées sont les suivantes :
Mélange sous agitation violente d'une solution contenant 0,26ml de Me₄NOH (1M) et 150 ml d'eau avec une solution contenant 1,33 ml de TIPT et 9 ml d'éthanol. La concentration du mélange est alors de 0,03 mol.l-1 en TIPT et le rapport des concentrations précurseur/catalyseur est de 17,2.
Une première reconcentration de facteur 10 est effectuée par chauffage à 150°C pour obtenir une concentration de 0,3 mol.l⁻¹ avant une dilution de facteur 70 dans l'éthanol puis une reconcentration de 70 fois par chauffage à 130°C à l'issue duquel une solution de nanocristaux d'anatase dispersés dans l'éthanol est obtenue. Dans les exemples suivants, la concentration finale (après dilution, reconcentration) de la solution en titane est ainsi d'environ 0,3 mol.l⁻¹ et le rapport précurseur sur catalyseur est d'environ 17.
La cristallisation n'est pas influencée par la concentration de départ en précurseur. En revanche nous avons vu les effets sur les propriétés optiques du rapport entre précurseur et catalyseur. La taille des particules obtenues est majoritairement comprise entre 5 et 30 nm et la transmission optique d'un substrat polycarbonate recouvert du dépôt solide d'anatase est supérieure à 80% dans le domaine spectral allant de 450 à 1100 nm. Dans les exemples suivants, les propriétés photo-catalytiques de couches déposées sur silicium sont comparées à celle d'un dépôt sol-gel traditionnel (solution sol-gel réagissant en formant un gel polymérique inorganique transparent) d'anatase de 100 nm d'épaisseur déposé sur silicium et cristallisé à 500°C. La transmission optique est mesurée sur des couches déposées sur substrat polycarbonate.

### Effet du traitement thermique :

Exemple 1a : 3 couches sans traitement thermique.
   Adhérence moyenne

### Effet photo-catalytique : 30% de l'activité observée pour un dépôt traité à 500°C.

Exemple 1b : 3 couches avec traitement thermique à 140°C.
   Adhérence bonne

### Effet photo-catalytique : 50% de l'activité observée pour un dépôt traité à 500°C. La combinaison adhérence et effet photo-catalytique peut donc être optimisée à toute température intermédiaire entre l'ambiante et 140°C en fonction de la nature du substrat et de sa sensibilité thermique.

### Effet photo-catalytique et effet du nombre de couches :

Exemple 2a : 2 couches
   30% de l'activité observée pour un dépôt traité à 500°C
Exemple 2b : 6 couches
   100% de l'activité observée pour un dépôt traité à 500°C
Exemple 2c : 12 couches
   200% de l'activité observée pour un dépôt traité à 500°C
   L'effet photo-catalytique peut donc être fortement amélioré par augmentation du nombre de couches déposées. Cela est particulièrement intéressant car l'obtention du dépôt est simple de mise en oeuvre et permet d'obtenir de très bons dépôts autonettoyants.

### Qualité optique sans traitement thermique :

Exemple 3a : 2 couches

### Pertes par diffusion/absorption: maximum 2% Transmission maximale sur substrat polycarbonate : 88% à 1100 nm

Exemple 3b : 4 couches

### Pertes par diffusion/absorption : maximum 2% Transmission maximale sur substrat polycarbonate : 88% à 500 nm

Exemple 3c : 6 couches

### Pertes par diffusion/absorption : maximum 2% Transmission maximale sur substrat polycarbonate : 90% à 700 nm

Exemple 3d : 12 couches

### Pertes par diffusion/absorption : maximum 4%

Transmission maximale sur substrat polycarbonate : 88% à 700 nm
L'ordre de grandeur des propriétés photo-catalytiques d'un substrat muni d'une couche autonettoyante obtenue selon l'invention est donc proche de celui considéré comme étalon, le procédé selon l'invention présente donc de très bonnes performances sans nécessiter un traitement thermique à haute température du substrat. L'invention permet donc d'obtenir un dépôt contenant des particules d'anatase et présentant des propriétés autonettoyantes sur un substrat et ceci sans traitement thermique ou avec traitement à basse température. Les propriétés de résistance à l'abrasion du dépôt autonettoyant peuvent être améliorées par le dépôt d'une couche mince à la surface du dépôt de la couche autonettoyante. Bien que cette invention ait été décrite en accord avec les modes de réalisation présentés, un homme du métier reconnaîtra immédiatement qu'il existe des variantes aux modes de réalisation présentés et que ces variantes restent dans l'esprit et sous la portée de la présente invention. Ainsi, de nombreuses modifications peuvent être réalisées par un homme du métier sans pour autant s'exclure de l'esprit et de la portée définies par les revendications suivantes.

## Revendications

1. Procédé d'élaboration d'une solution incluant des pigments d'anatase, **caractérisé en ce qu'**il comprend :
- une étape initiale de réaction chimique en phase liquide, ladite phase liquide incluant de l'eau, un catalyseur basique, un précurseur de titane réagissant par hydrolyse et polycondensation en phase aqueuse basique, le rapport de concentration du précurseur de titane avec le catalyseur étant choisi pour favoriser la croissance de cristallites submicroniques,
- au moins une étape de dilution dans au moins un solvant organique présentant un point d'ébullition supérieur à celui de l'eau ou présentant un azéotrope à minimum avec l'eau,
- au moins une étape de reconcentration de la solution obtenue par élimination de l'eau ou de l'azéotrope eau-solvant.

2. Procédé d'élaboration d'une solution selon la revendication 1, **caractérisé en ce que** le catalyseur utilisé est un catalyseur basique ne détériorant pas les propriétés photo-catalytiques des cristallites d'anatase.

3. Procédé d'obtention d'un substrat autonettoyant muni sur au moins une partie d'une de ses faces d'un revêtement à propriétés photo-catalytiques à base de dioxyde de titane au moins partiellement cristallisé et incorporé audit revêtement en partie sous forme de particules majoritairement cristallisées sous forme anatase, **caractérisé en ce que** ledit revêtement est obtenu par au moins un dépôt d'une solution élaborée selon un procédé conforme à l'une des revendications 1 et 2.

4. Procédé d'obtention d'un substrat selon la revendication 3, **caractérisé en ce que** le substrat sur lequel est déposée la solution est traité à une température inférieure ou égale à 140°C.

5. Substrat autonettoyant muni sur au moins une partie d'une de ses faces d'un revêtement à propriétés photo-catalytiques à base de dioxyde de titane au moins partiellement cristallisé et incorporé audit revêtement en partie sous forme de particules majoritairement cristallisées sous forme anatase, **caractérisé en ce que** ledit substrat est obtenu par un procédé d'obtention conforme à l'une des revendications 3 et 4.
